# EUROPEAN PATENT APPLICATION

(11) **EP 4 818 570 A1**
(43) Date of publication of application: **07.10.2026**
(21) Application number: 25168549.1
(22) Date of filing: 04.04.2025
(51) Int. Cl.: F17C 11/00, F17C 6/00

(54) **A METHOD FOR FILLING A TARGET LIQUID HYDROGEN STORAGE VESSEL, AND A HYDROGEN STORAGE SYSTEM**

(71) Applicant: GSI Helmholtzzentrum für Schwerionenforschung GmbH, 64291 Darmstadt (DE); Max-Planck-Gesellschaft zur Förderung der Wissenschaften e.V., 80539 München (DE)
(72) Inventor: Spiller, Peter, Neu-Anspach (DE); Zobel, Nick Peter, Neu-Isenburg (DE); Blaum, Klaus, Bockenau (DE)
(74) Representative: Müller-Boré & Partner Patentanwälte PartG mbB

(57) **Abstract**

The present invention relates to a method for filling a target liquid hydrogen storage vessel (200), the method comprising:
- providing a mixture (30) of liquid hydrogen (10) and adsorbent material (20) in a preparatory liquid hydrogen storage vessel (100), the adsorbent material (20) being configured to adsorb hydrogen; and
- conveying, at least in part, the mixture (30) of liquid hydrogen (10) and adsorbent material (20) from the preparatory liquid hydrogen storage vessel (100) to the target liquid hydrogen storage vessel (200).

Further, the present invention relates to a hydrogen storage system (500).

## Description

The present invention relates to the field of hydrogen storage technology. In particular, the present invention relates to a method for filling a target liquid hydrogen storage vessel, and to a hydrogen storage system.

Worldwide, extensive measures are being taken to protect the climate. For this purpose, international agreements such as the Paris Climate Agreement of 2015 have been concluded. In particular, the Paris Agreement has three objectives: First, the states set themselves the global goal of limiting global warming to be well below two degrees Celsius compared to the pre-industrial era, with the aim of limiting global warming to 1,5 degrees Celsius. Second, the ability to adapt to climate change should be strengthened and established as an equal goal alongside the reduction of greenhouse gas emissions. Third, financial flows should be brought into line with climate goals. With regard to the reduction of greenhouse gas emissions, the aim in the energy supply sector is to switch to alternatives to fossil fuels that have the lowest possible emission. For example, in energy production, the expansion of solar and wind energy in Germany is being promoted and driven forward. By 2030, 80% of electricity consumption is to be covered by renewable energies, primarily including wind and solar energy.

Electricity generation from solar and wind energy is subject to strong fluctuations depending on the weather conditions, time of day and season. There are currently strong fluctuations in electricity generation, which cannot cover the electricity demand in Germany for more than half of the period under review. This gap is largely closed by international electricity trading in the period under review.

In addition to international electricity trading, the energy transition requires storage technologies to cover electricity demand consistently and sufficiently. Hydrogen is proving to be a promising energy storage medium, as it can be produced almost inexhaustibly and emission-free by electrolytically splitting water into oxygen and hydrogen. With the help of fuel cells, hydrogen can also be converted into electrical energy without emissions. The emission-free combustion of hydrogen to generate energy is also possible. Both the fuel cell and the combustion process produce water as the only product.

However, between production and consumption, the growing hydrogen industry faces a problem: the storage. One liter of gasoline can store 8,8 kWh of energy. For the same amount of energy, around 3300 liters of hydrogen are needed at normal pressure and room temperature. The hydrogen economy requires storage systems with significantly higher volumetric storage densities.

A distinction is made between volumetric and gravimetric energy density. The gravimetric energy density describes the energy content of hydrogen per mass, which is 33,3 kWh/kg regardless of the type of storage. For gasoline, it is 11,5 kWh/kg. The volumetric energy density describes the energy content per volume, which in turn depends on the density of the hydrogen. The density in turn depends on the type of storage. If one looks at the entire storage system, both the gravimetric energy density and the volumetric energy density depend on the system.

To achieve higher volumetric energy densities than under normal conditions, the following processes are used industrially: Gaseous compressed hydrogen or liquid cryogenic hydrogen. To achieve higher volumetric storage densities, hydrogen is stored and transported in pressure vessels at pressures of 300 to 700 bar. Volumetric energy densities of 0,73 to 1,30 kWh/I are achieved. To achieve storage pressures of 700 bar, the hydrogen is first compressed to approximately 900 bar. A compression from 1 bar to 1000 bar requires around 2,61 kWh/kg (i.e. 8% of the energy content). The pressure vessels, which enable storage pressures of 300 to 700 bar, cost between 40 and 150 Euros per stored kWh for use in vehicle technology. At temperatures below -252,85 °C (20,3 K), hydrogen becomes liquid at normal pressure, which is accompanied by a significant increase in density, so that the energy density of liquid hydrogen is 2,36 kWh/l. On an industrial scale, the liquefaction of hydrogen consumes 11 kWh/kg (i.e. 30% of the energy content). In its liquid state, hydrogen can be stored and transported in cryogenic containers, but due to the temperature difference between the environment and the hydrogen, heat is transferred to the hydrogen, which in turn leads to an increase in pressure in the tank if the tank is not cooled. The cryogenic container can be compared with a thermos flask, in which there is an evacuated space between an outer and inner container, the evacuated space being additionally insulated against thermal radiation by insulating material.

If the maximum pressure, which is around 5-13 bar for conventional liquid hydrogen tanks, is reached in the tank, the hydrogen must be released via a valve. This process is called "evaporation". The time until evaporation is called the "rest time" of the tank. Typical evaporation losses are between 0,3% and 3% per day, depending on the tank system. Liquid hydrogen tanks have not yet been used in commercial vehicle technology, so no price can be used to compare them with compressed gas storage. However, it should be noted that the material requirements for a 700 bar pressure tank exceed those of the liquid hydrogen tank.

Another storage method is to store hydrogen in physical or chemical compounds. Higher volumetric energy densities are achieved by binding the hydrogen to adsorbents through physical or chemical adsorption. The term adsorption generally refers to the enrichment of a fluid phase of a substance, the adsorbate, in the boundary layers of a solid substance, the adsorbent. Adsorption is based on molecular interactions between the surface of the adsorbent and the adsorbate. In this context, a differentiation between physisorption and chemisorption is relevant. In chemisorption, the adsorbed molecules undergo a chemical reaction that is accompanied by stronger binding forces than in physisorption. In contrast to chemisorption, the adsorbed molecules remain unchanged in physisorption. In addition, physisorption is not limited to a single layer of adsorbed molecules on the surface of the adsorbent.

It is an object of the present invention to provide an improved method and system for filling a target liquid hydrogen storage vessel. In particular, it is an object of the present invention to improve storing and/or refueling liquid hydrogen. In particular, it is an object of the present invention to accelerate refueling a hydrogen tank and/or to reduce hydrogen evaporation during a hydrogen refueling process. This object is solved by the subject-matter of the independent claims. Preferred embodiments are subject to the dependent claims.

According to one aspect of the present invention, a method for filling a target liquid hydrogen storage vessel is provided. The method comprises:
- providing a mixture of liquid hydrogen and adsorbent material in a preparatory liquid hydrogen storage vessel, the adsorbent material being configured to adsorb hydrogen; and
- conveying, at least in part, the mixture of liquid hydrogen and adsorbent material from the preparatory liquid hydrogen storage vessel to the target liquid hydrogen storage vessel.

Within the present description, the preparatory liquid hydrogen storage vessel is referred to as "first vessel", and the target hydrogen storage vessel is referred to as "second vessel". The terms "vessel", "container" and "tank" are particularly used synonymous within the present description. In particular, the first and second vessel are configured to store liquid hydrogen. The first vessel and/or the second vessel may be a cryogenic vessel. The first vessel (i.e. the preparatory liquid hydrogen storage vessel) may be a stationary vessel or a mobile (i.e. portable) vessel. The first vessel may comprise a cooling system which is configured to be connected (and disconnected) with an external coolant supply and/or an external source of conduction cooling. Alternatively, the first vessel may comprise a cooling system, wherein the cooling system comprises a cooling circuit and/or a coolant supply and/or a conduction based cooling system inside the storage and/or an external source of conduction cooling. A coolant may be a gas or a liquid or both. A source of conduction cooling may be a cold head. A conduction based cooling system may be a copper framework. For example, one or more coolants of the cooling circuit may comprise or be one or more of the following: helium (gaseous and/or liquid), hydrogen (gaseous and/or liquid), nitrogen (liquid), neon (liquid), krypton (liquid), argon (liquid), oxygen (liquid), water vapor, air, carbon dioxide, etc.

The second vessel (i.e. the target liquid hydrogen storage vessel) may be a stationary vessel. Preferably, the second vessel is a mobile (i.e. portable) vessel. Thus, within the present description, the second vessel (i.e. the target liquid hydrogen storage vessel) may also be referred to as transport vessel or transport liquid hydrogen storage vessel.

In particular, the first vessel and/or the second vessel may comprise an outer container, an inner container, and an insulation for preventing the passage of heat, particularly a super-insulation (e.g. by means of vacuum and/or multi-layers) between the inner container and the outer container. In other words, the first and/or second vessel may be super-insulated (against heat introduction from the environment). For example, the first and/or second vessel may comprise a mounting (particularly a hanger / suspension rod assembly) for mounting an inner container to an outer container (e.g. by using mounting means having a low heat conductivity). Alternatively or in addition, the first and/or second vessel of the hydrogen storage system may comprise a thermal shield.

Due to adsorption effects and the heat capacity of the adsorbent material, the mixture of adsorbent material and liquid hydrogen is able to absorb the heat of a storage vessel and/or other components better than is the case with conventional filling with pure liquid hydrogen (i.e. without adsorbent material). With conventional refueling, the heat from the warm storage vessel or tank is transferred to the cold liquid hydrogen, causing some of the liquid hydrogen to evaporate, so the storage vessel must be filled multiple times to achieve suitable storage densities. This process takes time, which is an important factor, e.g., for hydrogen aircraft. In this context, "better" means that during refueling with the mixture of liquid hydrogen and adsorbent material, significantly more heat can be absorbed by the system before refilling is necessary to achieve suitable storage densities.

The adsorbent material may comprise or be a porous material. In particular, the adsorbent material may be a granulate (adsorbent granulate). For example, the adsorbent material may comprise one or more of the following: porous carbons (e.g. active carbon), metal hydrides, metal organic frameworks (MOFs), carbon nanotubes (CNTs), zeolites, graphene (or graphene like materials), etc.

Preferably, the adsorbent material (adsorbent) has one or more of the following properties in view of the adsorption of hydrogen:
- The relative storage density $x = \frac{{ρ}_{b} {n}_{e} + \left(1-\frac{{ρ}_{b}}{{ρ}_{s}}\right) {ρ}_{a}}{{ρ}_{{H}_{2}}}$ is preferably at least 70%, more preferably at least 80%, particularly with conventional filling with liquid hydrogen to 80% of the volume. The storage density of a mixture of liquid hydrogen and adsorbent material can be approximated by first calculating the amount of hydrogen adsorbed on the adsorbent material per volume by multiplying the bulk density *ρ_{b}* of the adsorbent material with the excess adsorption capacity *nₑ* (i.e., the excess amount of adsorbed hydrogen per weight of adsorbent material at storage conditions), i.e., *ρ_{b}nₑ.* There will also be unadsorbed hydrogen in interstices of the adsorbent bulk. Therefore, to the density from above (i.e. the product *ρ_{b}nₑ*) the product of the fraction of gaps in the total volume and the density of the adsorbate *ρₐ* at storage conditions (in this case hydrogen), namely $\left(1-\frac{{ρ}_{b}}{{ρ}_{s}}\right) {ρ}_{a}$, is added, wherein *ρₛ* is the skeletal density. This density, namely ${ρ}_{b} {n}_{e} + \left(1-\frac{{ρ}_{b}}{{ρ}_{s}}\right) {ρ}_{a}$, is compared to the density *ρ*_{*H*₂} of a conventional liquid hydrogen storage at the following conditions: Temperature T = 20,32 K, pressure p = 1 bar, volumetric vapor/liquid ratio of 25% (which relates to a storage filled to 80% of its volume with liquid hydrogen). As the conditions should be the same for both storages, it follows *ρₐ = ρ*_{*H*₂}, and therefore the final ratio is: $x = \frac{{ρ}_{b} {n}_{e}}{{ρ}_{{H}_{2}}} + \left(1-\frac{{ρ}_{b}}{{ρ}_{s}}\right)$. For adsorbents qualified for use with the liquid hydrogen adsorbent mixture, this ratio x is preferably larger than 70%, and more preferably larger than 80%.
- An absolute adsorption capacity at the boiling point of hydrogen is preferably larger than 20 mol hydrogen per kg adsorbent material. The absolute adsorption capacity of an adsorbent material (e.g. active carbon) at the boiling point of hydrogen (20,3 K at a pressure of 1 bar) refers to the total amount of hydrogen that can be adsorbed by the adsorbent material under these conditions (i.e., at 20,3 K and 1 bar). The absolute adsorption capacity is defined as:
   *n_{abs} = nₑ + ρ*_{*H*₂}*V_{ads}*, wherein *nₑ* is the excess adsorption capacity, measured experimentally, *ρ*_{*H*₂} is the bulk density of hydrogen gas at the given temperature
   and pressure (i.e., 20,3 K and 1 bar), and *V_{ads}* is the volume of the adsorbed phase within pores of the adsorbent material.

When hydrogen is stored in a storage volume and/or a storage vessel, the storage volume and/or the vessel comprises both a liquid phase and a gaseous phase of hydrogen. Thus, a liquid phase and a gaseous phase of hydrogen are usually present in the first vessel and/or second vessel.

In a preferred embodiment, providing a mixture of liquid hydrogen and adsorbent material comprises preparing the mixture by the following steps:
- providing the preparatory liquid hydrogen storage vessel containing the adsorbent material; and
- filling liquid hydrogen into the preparatory liquid hydrogen storage vessel.

In particular, before performing a refueling process, the mixture of liquid hydrogen and adsorbent material is prepared in a separate vessel (namely the preparatory liquid hydrogen storage vessel) by repeatedly filling the adsorbent material (granulate) with liquid hydrogen and/or by pre-cooling the adsorbent material and/or by active cooling. The preparatory liquid hydrogen storage vessel is thus not the actual storage vessel (i.e. the target storage vessel) but rather a separate vessel.

For the filling, the first and/or second vessel particularly comprise an opening and/or valve for filling on the top of the respective (first and/or second) vessel, and an opening and/or valve for emptying the mixture of liquid hydrogen and adsorbent material on the bottom of the respective (first and/or second) vessel.

In a further preferred embodiment, providing a mixture of liquid hydrogen and adsorbent material comprises one or more of the following:
- cold-running the preparatory liquid hydrogen storage vessel by repeatedly filling liquid hydrogen into the preparatory liquid hydrogen storage vessel;
- pre-cooling a hydrogen storage volume of the preparatory liquid hydrogen storage vessel and/or the adsorbent material by means of a coolant, particularly by means of (cold) hydrogen gas;
- active cooling the hydrogen storage volume of the preparatory liquid hydrogen storage vessel.

For an active cooling of the hydrogen storage volume of the preparatory liquid hydrogen storage vessel, one or more heat exchangers may be used, wherein the one or more heat exchangers may be arranged inside and/or outside the target liquid hydrogen storage vessel. Alternatively or in addition, an active cooling may be carried out by means of one or more hydraulic circuits (comprised, e.g., of coils and/or plates) that circulate a coolant through the hydrogen storage volume. Thereby, excess heat from the mixture of liquid hydrogen and adsorbent material can be absorbed. As an alternative or in addition an active cooling may be carried out by means of a heat conduction based cooling system consisting of an external "source", i.e. an external cooling element that may comprise cold head or even consist of a cold head, and an internal system to conduct heat to the cooling source. In such an example the internal system may comprise a heat conducting framework, such as a copper framework or an aluminum framework, etc. to conduct excess heat from the mixture of liquid hydrogen and adsorbent material. Advantageously the internal system does not require any coolant, specifically any fluid or liquid cooling, but the excess heat can be transferred by conductive heat transfer of the heat conducting framework to the external cooling element. Advantageously the heat conducting framework that is operated without any coolant fluid or coolant liquid is not as vulnerable to damage and/or is not as easily impaired e.g. due to shock when the system is a mobile system that is moved. As an example, the external cooling element, e.g. the cold head, may be connected to a local compressor. The compressor may me a mobile compressor, e.g. arranged on a trailer. The compressor may be connected to the cold head according to demand.

In a further preferred embodiment, providing a mixture of liquid hydrogen and adsorbent material comprises conveying, at least in part, liquid hydrogen from a liquid hydrogen source to the preparatory liquid hydrogen storage vessel containing the adsorbent material.

In a further preferred embodiment, conveying, at least in part, the mixture of liquid hydrogen and adsorbent material from the preparatory liquid hydrogen storage vessel to the target liquid hydrogen storage vessel comprises pre-cooling the target liquid hydrogen storage vessel.

In an example where the active cooling is carried out by means of the heat conduction based cooling system consisting of the external cooling element and the internal system comprising the heat conducting framework, advantageously the external cooling element may be provided and/or may be connected to a local compressor only when pre-cooling is carried out. In addition, the compressor may also be connected to the external cooling element during normal cooling. When pre-cooling is finished and/or when no cooling is carried out the compressor may not be connected and optionally be located in storage.

In a further preferred embodiment, pre-cooling the target liquid hydrogen storage vessel comprises one or more of the following:
- cold-running the target liquid hydrogen storage vessel by filling liquid hydrogen into the target liquid hydrogen storage vessel;
- cooling a hydrogen storage volume of the target liquid hydrogen storage vessel by means of a coolant, particularly by means of cold hydrogen gas;
- active cooling a hydrogen storage volume of the target liquid hydrogen storage vessel.

For an active cooling of the hydrogen storage volume of the target liquid hydrogen storage vessel, one or more heat exchangers may be used, wherein the one or more heat exchangers may be arranged inside and/or outside the target liquid hydrogen storage vessel. Alternatively or in addition, an active cooling may be carried out by means of one or more hydraulic circuits (comprised, e.g., of coils and/or plates) that circulate a coolant through the hydrogen storage volume. Thereby, excess heat from the mixture of liquid hydrogen and adsorbent material can be absorbed. As discussed above, as an alternative or in addition, the active cooling may be carried out by means of a heat conduction based cooling system consisting of an external "source", i.e. an external cooling element that may comprise cold head or even consist of a cold head, and an internal system to conduct heat to the cooling source. The above discussion equally applies.

Preferably, the mixture of liquid hydrogen and adsorbent material provided in the preparatory liquid hydrogen storage vessel has a temperature below a boiling temperature of hydrogen (for example 20,3 K at a pressure of 1 bar). It is to be understood that the boiling point is pressure dependent, which means that if the mixture is provided at a pressure other than 1 bar, the boiling temperature of the mixture of liquid hydrogen and adsorbent material provided in the preparatory liquid hydrogen storage vessel may be above 20,3 K.

In a further preferred embodiment, the preparatory liquid hydrogen storage vessel is a first vessel of a hydrogen storage system, and the target liquid hydrogen storage vessel is a second vessel of the hydrogen storage system.

In particular, the target liquid hydrogen storage vessel may be configured to refuel a consumer hydrogen storage tank with gaseous and/or liquid hydrogen stored in the target liquid hydrogen storage vessel (and provided by the mixture of liquid hydrogen and adsorbent material). The consumer hydrogen storage tank may not be part of the hydrogen storage system and may rather relate to an external hydrogen storage tank. However, according to another embodiment, the consumer hydrogen storage tank may be part of the hydrogen storage system and particularly comprise or be a third tank or vessel of the hydrogen storage system.

In particular, the invention provides a method for storing hydrogen by using a hydrogen storing system, the hydrogen storing system comprising a first vessel and a second vessel, the method comprising:
- providing a mixture of liquid hydrogen and adsorbent material in the first vessel, wherein the first vessel is a preparatory liquid hydrogen storage vessel of the hydrogen storing system, and wherein the adsorbent material is configured to adsorb hydrogen; and
- conveying, at least in part, the mixture of liquid hydrogen and adsorbent material from the first vessel to the second vessel, wherein the second vessel is a target liquid hydrogen storage vessel of the hydrogen storage system and configured to refuel a consumer hydrogen storage tank (particularly an external hydrogen storage tank that is not part of the hydrogen storing system) with gaseous and/or liquid hydrogen stored in the second vessel (and provided by the mixture of liquid hydrogen and adsorbent material).

In particular, by the method described herein, two liquid hydrogen storage vessels, namely the preparatory liquid hydrogen storage vessel (first vessel) and the target liquid hydrogen storage vessel (second vessel), are used for storing hydrogen. For example, the mixture of liquid hydrogen and adsorbent material provided and/or prepared in the first vessel may be transported (e.g. in the second vessel) to a hydrogen consumer (such as a parking hydrogen aircraft). Liquid and/or gaseous hydrogen (particularly without the adsorbent material) may then be transferred, at least in parts, from the second vessel of the hydrogen storage system to a vessel or tank of the hydrogen consumer.

In particular, the hydrogen storage system described herein (particularly the first vessel and/or the second vessel of the hydrogen storage system) may be a stand-alone hydrogen storage system. The term "stand-alone" particularly means within the present description that the hydrogen storage system serves for storing hydrogen and transporting the stored hydrogen to a consumer (e.g. a vehicle or airplane) but is not part of the consumer itself. Thus, according to an embodiment, neither the first nor the second vessel of the hydrogen storage system described herein relates to an internal tank of a consumer and/or a fuel cell of the consumer.

According to a further aspect of the present invention, a hydrogen storage system is provided. The hydrogen storage system comprises:
- a preparatory liquid hydrogen storage vessel that contains adsorbent material for preparing a mixture of liquid hydrogen and the adsorbent material, the adsorbent material being configured to adsorb hydrogen; and
- conveying means configured to convey the mixture of liquid hydrogen and adsorbent material from the preparatory liquid hydrogen storage vessel to a target liquid hydrogen storage vessel. The conveying means (transfer system) particularly comprise one or more mixture transfer lines. Preferably, the at least one mixture transfer line is flexible and particularly a cryogenic hose. Preferably, the at least one mixture transfer line is heat-insulated, particularly super-insulated (e.g. insulated by means of vacuum). In particular, the preparatory liquid hydrogen storage vessel, the target liquid hydrogen storage vessel and/or the conveying means are configured and/or arranged such that the mixture is conveyed via a gravity-based transfer. In particular, the preparatory liquid hydrogen storage vessel (particularly a preparatory buffer of the preparatory liquid hydrogen storage vessel) is arranged higher than the target liquid hydrogen storage vessel (particularly a target buffer of the target liquid hydrogen storage vessel). In particular, an outlet for draining the mixture of liquid hydrogen and adsorbent material is arranged at the bottom of the preparatory liquid hydrogen storage vessel, and/or an inlet for receiving the mixture of liquid hydrogen and adsorbent material is arranged on top of the target liquid hydrogen storage vessel. Alternatively or in addition, the conveying means are configured and/or arranged such that the mixture is conveyed by a pressurized transfer, wherein a pressurized gas (particularly cold hydrogen gas) may be used to push the mixture of liquid hydrogen and adsorbent material through a hose of the conveying means. Accordingly, the preparatory liquid hydrogen storage vessel may have an inlet for providing pressurized (hydrogen) gas.

The at least one hose of the conveying means may be pre-cooled. Alternatively or in addition, the at least one hose of the conveying means may be filled with an (inert) gas prior to conveying the mixture of liquid hydrogen and adsorbent material. This advantageously prevents a mixing of hydrogen and oxygen.

In particular, conveying means for conveying a mixture of liquid hydrogen and adsorbent material differs from conveying means for conveying liquid hydrogen alone. Since the use of pumps is limited by the adsorbent, a gravity-based transfer may be used, which is not common for transferring liquid hydrogen. Since not only hydrogen but also the adsorbent material has to be pushed through at least one hose of the conveying means, the diameter of the at least one hose is preferably selected based on the adsorbent material (particularly based on a granular size of the adsorbent material). In particular, the diameter of the at least one hose is (selected) such that clogging of the hose by the adsorbent material is prevented. Moreover, when conveying the mixture by means of a pressurized gas, a pressure of the pressurized gas is preferably selected based on the adsorbent material (particularly based on a granular size of the adsorbent material). In particular, a pressure of the pressurized gas may be (selected) such that the mixture of liquid hydrogen and adsorbent material can be pushed through the at least one hose of the conveying means.

In a preferred embodiment, the hydrogen storage system further comprises:
- a liquid hydrogen source; and
- a delivery line configured to convey hydrogen from the hydrogen source to the preparatory liquid hydrogen storage vessel. The liquid hydrogen source particularly comprises or is a liquid hydrogen source apparatus and/or a liquid hydrogen source tank configured to store liquid hydrogen. In particular, the liquid hydrogen source has an outlet configured to deliver liquid hydrogen to the preparatory liquid hydrogen storage vessel. The delivery line is particularly a super-insulated hose.

In a further preferred embodiment, the preparatory liquid hydrogen storage vessel has a first hydrogen inlet configured to receive liquid hydrogen from a hydrogen source, and/or an adsorbent inlet configured to receive adsorbent material, and/or a second hydrogen inlet configured to receive pressurized hydrogen gas. The first hydrogen inlet and the adsorbent inlet may be one and the same inlet or separate inlets.

In a further preferred embodiment, the preparatory liquid hydrogen storage vessel has
- an outlet for draining the mixture of liquid hydrogen and adsorbent material and/or delivering the mixture of liquid hydrogen and adsorbent material to the target liquid hydrogen storage vessel, wherein the outlet is preferably arranged on the bottom of the preparatory liquid hydrogen storage vessel; and/or
- a mesh outlet which is connectable to a vacuum system.

In an embodiment the outlet is preferably arranged on the bottom of the preparatory liquid hydrogen storage vessel. Advantageously this allows gravity transfer. However, other arrangements, e.g. having the outlet at a side or even at the top of the vessel may be suitable for pressure transfer.

When arranging the draining and/or delivering outlet on the bottom of the preparatory liquid hydrogen storage vessel, a gravity-based transfer of the mixture of liquid hydrogen and adsorbent material is possible. In particular, a diameter of the outlet of the preparatory liquid hydrogen storage vessel is selected based on the adsorbent material (particularly based on a granular size of the adsorbent material). In particular, a diameter of the outlet of the preparatory liquid hydrogen storage vessel is (selected) such that clogging of the outlet by the adsorbent material is prevented.

The mesh outlet is preferably arranged on top (particularly at a highest point) of the preparatory liquid hydrogen storage vessel. It may be connectable or connected to a vacuum system (that may be part of the hydrogen storage system) for desorbing any gases attached to the adsorbent before filling the preparatory liquid hydrogen storage vessel with liquid hydrogen. The mesh outlet and/or vacuum system may also provide a benefit when used for evaporative cooling and/or for pressure control of the system.

In a further preferred embodiment, the hydrogen storage system further comprises
- the target liquid hydrogen storage vessel for receiving and storing the mixture of liquid hydrogen and adsorbent material prepared in the preparatory liquid hydrogen storage vessel.

In a further preferred embodiment, the target liquid hydrogen storage vessel has an inlet configured to receive the mixture of liquid hydrogen and adsorbent material.

In a further preferred embodiment, the target liquid hydrogen storage vessel has an outlet configured to remove the mixture of liquid hydrogen and adsorbent material from the target liquid hydrogen storage vessel.

For the above-mentioned further independent aspects and in particular for preferred embodiments in this regard, the explanations given above or below concerning the embodiments of any of the other aspects also hold true. In particular, for one independent aspect of the present invention and for preferred embodiments in this regard, the explanations given above and below concerning the embodiments of the respective other aspects also hold true.

Individual embodiments for solving the problem are described by way of example below with reference to the figures. In this case, the individual embodiments described have in part features which are not absolutely necessary for implementing the claimed subject matter, but which provide desired properties in specific applications. In this respect, embodiments which do not have all the features of the embodiments described below are also intended to be regarded as disclosed in a manner falling under the technical teaching described. Furthermore, in order to avoid unnecessary repetitions, specific features are mentioned only with regard to individual embodiments from among the embodiments described below. It is pointed out that the individual embodiments are therefore intended to be considered not only by themselves but also in a joint consideration. On the basis of this joint consideration, the person skilled in the art will recognize that individual embodiments can also be modified by inclusion of individual or a plurality of features of other embodiments. It is pointed out that a systematic combination of the individual embodiments with individual or a plurality of features described in view of other embodiments may be desirable and expedient and is therefore intended to be taken into account and also to be regarded as encompassed by the description.

### Brief description of the figures

The above and other objects, features and advantages of the present invention will become more apparent upon reading the following description of preferred embodiments and accompanying drawings. Other features and advantages of the subject-matter described herein will be apparent from the description and the drawings and from the claims. It should be understood that even though embodiments are separately described, single features and functionalities thereof may be combined without prejudice to additional embodiments. The present disclosure is illustrated by way of example and not limited by the accompanying figures.

Preferred embodiments of the present invention are exemplarily described regarding the following figures:
- **Fig. 1**: shows a simulation of the liquid hydrogen content in dependence on heat input in a 1 m³ hydrogen storage volume for different amounts of adsorbent material present in the hydrogen storage volume;
- **Fig. 2**: shows a schematic representation for illustrating the principle of the method according to an exemplary embodiment of the present invention;
- **Fig. 3**: shows a schematic representation of a preparatory liquid hydrogen storage vessel 100 as used according to preferred embodiments of the present invention;
- **Fig. 4**: shows a schematic representation of an exemplary target liquid hydrogen storage vessel 200 as used according to preferred embodiments of the present invention;
- **Fig. 5**: shows a schematic representation of a hydrogen storage system 500 according to a preferred embodiment of the present invention.

### Detailed description of the figures

The following detailed description relates to exemplary embodiments of the present invention. Other embodiments of the invention are possible within the scope of the invention as defined by the appended claims. Throughout the figures, same reference signs are used for the same or similar elements.

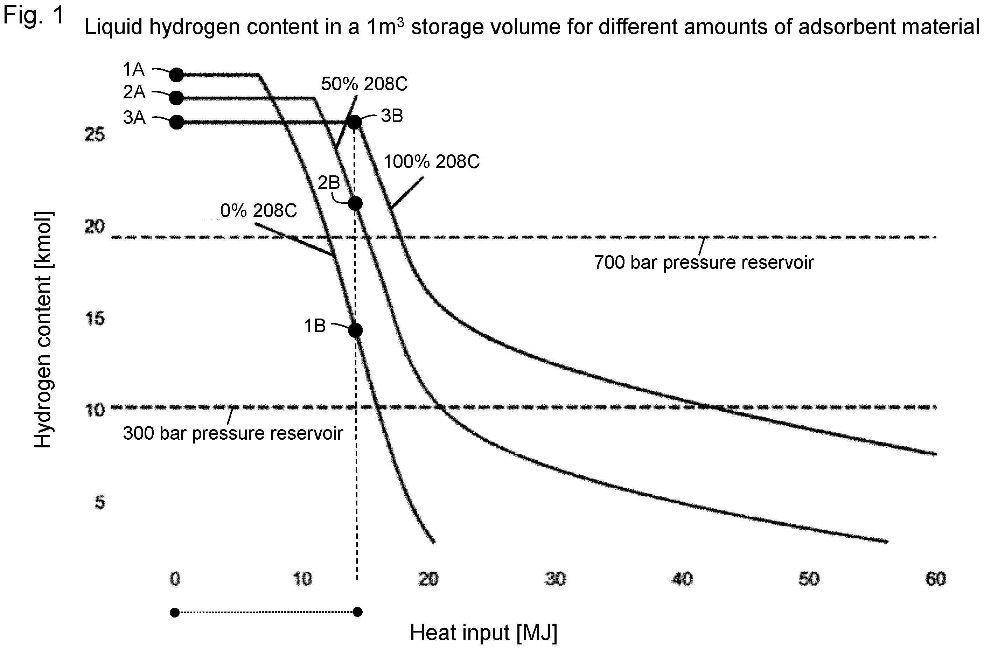

**Fig. 1** shows a simulation of the liquid hydrogen content in dependence on heat input in a 1 m³ hydrogen storage volume for different amounts of adsorbent material present in the hydrogen storage volume. As adsorbent material, active carbon 208C is used for the simulation. The simulation illustrates the influence of the adsorbent material on the extension of storage time in liquid hydrogen storage. Assuming that time is proportional to the heat input, it is clear from the diagram shown in Fig. 1 that the rest time increases significantly with the amount of activated carbon. For example, a storage tank which is completely or maximally filled with activated carbon (see the curve labeled with "100% 208C" in Fig. 1) results in a rest time that is more than twice than the rest time of a conventional liquid hydrogen storage tank (without adsorbent material, see the curve labeled with "0% 208C" in Fig. 1). The evaporation rate is constant for all storage tanks (irrespective of the amount of adsorbent material) after the start of evaporation, but levels off earlier with a larger amount of activated carbon 208C, so that the completely filled storage tank still has the storage density of a 300 bar pressure storage tank after twice the time in which the conventional liquid hydrogen storage tank only has 10% of its initial capacity. By varying the amount of activated carbon, a balance can be found between maximum storage capacity and extended rest time as well as reduced evaporation losses.

When filling liquid hydrogen into a storage tank including adsorbent material (such as activated carbon), an important factor is the adsorption enthalpy and the fact that the adsorbent material must be additionally cooled during refueling. This usually leads to high losses during refueling and thus to longer refueling times. In a liquid hydrogen tank, the loss due to so-called cold-running is 100% of the hydrogen filled into the tank for warm components, and between 20% and 30% for components that are already cold. When operating cold gas storage tanks, care is preferably taken to ensure that the tanks are never completely emptied. This keeps the system cold and there are fewer refill losses.

For a 1 m³ storage system with activated carbon, the adsorption enthalpy to be cooled according to the used model is 22,8 MJ, and the cooling of the activated carbon from 77 K to storage temperature (20,28 K) is 21,78 MJ. If cooling via the evaporation enthalpy of hydrogen is considered, 25,19 kmol are required to cool the adsorption enthalpy and 24,06 kmol to cool the activated carbon, which together correspond to almost 160% of the maximum storage capacity of the storage concept with activated carbon. This also shows that the heat capacity of activated carbon contributes to the extension of the rest time. Thus, it can be said that the significant increase in the rest time and the reduction in evaporation losses in liquid hydrogen storage systems by the use of adsorbent material (such as activated carbon) could lead to possible fields of application in which, despite the higher charging losses, lower densities and additional weight, the considerable advantages outweigh the disadvantages. Liquid hydrogen storage is already used on a large scale in both stationary and mobile applications. A cost-effective and simple modification to improve liquid hydrogen storage is provided by activated carbon and could be of particular interest for applications where the relevance of the extended storage time outweighs the gravimetric energy density.

As illustrated by the marked sections 1A-1B, 2A-2B and 3A-3B of the curves shown in Fig. 1, the present invention particularly exploits the beneficial effects of providing a mixture of liquid hydrogen and adsorbent material in a first (preparatory) liquid hydrogen storage tank and conveying or filling this mixture, at least in parts, from the first liquid hydrogen storage tank into a second (target) liquid hydrogen storage tank. The marked sections 1A-1B, 2A-2B and 3A-3B of the curves shown in Fig. 1 demonstrate the change of liquid hydrogen content in a 1 m³ storage volume for a heat input of about 13 MJ. In case that no adsorbent material is used (see the curve labeled with "0% 208C"), the liquid hydrogen content is reduced from about 28 kmol (point 1A) to about 14 kmol (point 1B) due to the 13 MJ heat input. In case that 50% adsorbent material is used (see the curve labeled with "50% 208C"), the liquid hydrogen content is reduced from about 27 kmol (point 2A) to about 21,5 kmol (point 2B) due to a 13 MJ heat input. In case that 100% adsorbent material is used (see the curve labeled with "100% 208C"), the liquid hydrogen content remains substantially constant at about 25,5 kmol during a 13 MJ heat input (points 3A and 3B). Thus, when a mixture of liquid hydrogen and adsorbent material is transferred from a first vessel to a second vessel, hydrogen losses due to evaporation can significantly be reduced compared to transferring pure liquid hydrogen, i.e. liquid hydrogen without adsorbent material. Further advantageously, the use of the preparation tank removes the problem of cooling the mixture from the application environment of the second tank. This means that there are fewer constraints in terms of time, space, infrastructure, etc. for the supply and preparation of the mixture.

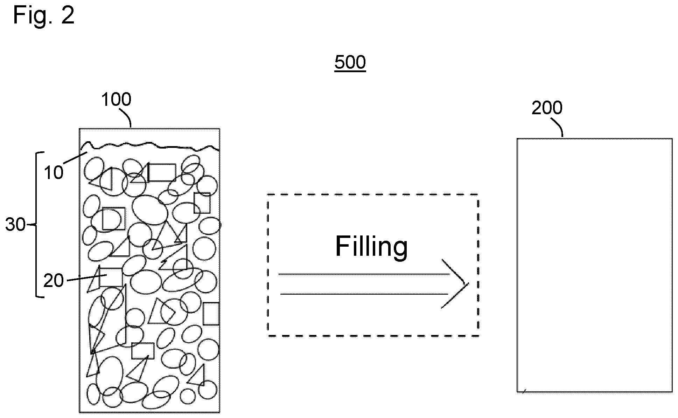

**Fig. 2** shows a schematic representation for illustrating the principle of the method for filling a target liquid hydrogen storage vessel 200 according to an exemplary embodiment of the present invention. The method comprises providing a mixture 30 of liquid hydrogen 10 and adsorbent material 20 in a preparatory liquid hydrogen storage vessel 100, wherein the adsorbent material 20, such as active carbon, is configured to adsorb hydrogen (liquid hydrogen and/or gaseous hydrogen). The method further comprises conveying, at least in part, the mixture 30 of liquid hydrogen 10 and adsorbent material 20 from the preparatory liquid hydrogen storage vessel 100 to the target liquid hydrogen storage vessel 200. The mixture 30 may be prepared by providing the preparatory liquid hydrogen storage vessel 100 containing the adsorbent material 20, and by subsequently filling liquid hydrogen 10 into the preparatory liquid hydrogen storage vessel 100. Accordingly, the preparatory liquid hydrogen storage vessel 100 is a first vessel of a hydrogen storage system 500, and the target liquid hydrogen storage vessel 200 is a second vessel of the hydrogen storage system 500.

Thus, the exemplary hydrogen storage system 500 illustrated in Fig. 2 comprises a preparatory liquid hydrogen storage vessel 100 containing adsorbent material 20 for preparing the mixture 30 of liquid hydrogen 10 and the adsorbent material 20, and the target liquid hydrogen storage vessel 200 for receiving and storing the mixture 30 of liquid hydrogen 10 and adsorbent material 20 prepared in the preparatory liquid hydrogen storage vessel 100. Further, the hydrogen storage system 500 comprises conveying means (not explicitly shown in Fig. 2) configured to convey the mixture 30 of liquid hydrogen 10 and adsorbent material 20 from the preparatory liquid hydrogen storage vessel 100 to the target liquid hydrogen storage vessel 200. Moreover, the hydrogen storage system 500 may further comprise a liquid hydrogen source (not explicitly shown in Fig. 2) and a delivery line (not explicitly shown in Fig. 2) configured to convey hydrogen from the hydrogen source to the preparatory liquid hydrogen storage vessel 100.

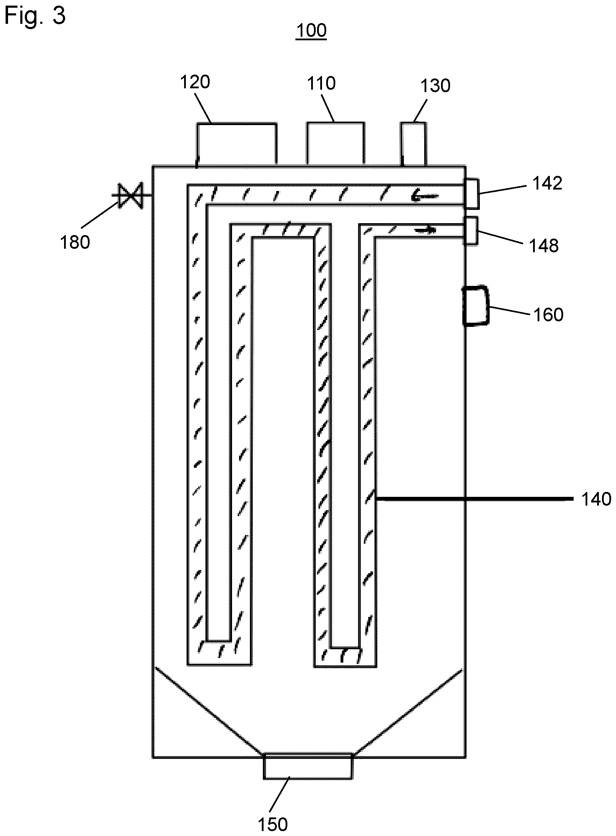

**Fig. 3** shows a schematic representation of a preparatory liquid hydrogen storage vessel 100 as used according to preferred embodiments of the present invention. The preparatory liquid hydrogen storage vessel 100 has a first hydrogen inlet 110 configured to receive liquid hydrogen 10 from a hydrogen source. The inlet 110 serves for conveying, at least in part, liquid hydrogen 10 from a liquid hydrogen source to the preparatory liquid hydrogen storage vessel 100 containing adsorbent material 20. The preparatory liquid hydrogen storage vessel 100 further has an adsorbent inlet 120 configured to receive adsorbent material 20. In particular, the preparatory liquid hydrogen storage vessel 100 may comprise one or more valves for loading and/or unloading the adsorbent material 20. By means of the one or more valves, the amount of adsorbent material 20 in the preparatory liquid hydrogen storage vessel 100 can be changed and/or adjusted, thereby achieving a variable trade-off between capacity and storage time. In addition, by loading and unloading the adsorbent material 20, the adsorbent material 20 can be removed over time and replaced, for example, by other adsorbents or processed adsorbent (e.g. reactivated active carbon).

Moreover, the preparatory liquid hydrogen storage vessel 100 has a second hydrogen inlet 130 configured to receive pressurized hydrogen gas. By means of pressurized hydrogen gas, the mixture 30 of liquid hydrogen 10 and adsorbent material 20 can be drained via an outlet 150 of the preparatory liquid hydrogen storage vessel 100, the outlet 150 being arranged on the bottom of the preparatory liquid hydrogen storage vessel 100. In particular, by means of pressurized hydrogen gas and/or the outlet 150, the mixture 30 of liquid hydrogen 10 and adsorbent material 20 can be delivered to the target liquid hydrogen storage vessel 200.

Moreover, the preparatory liquid hydrogen storage vessel 100 may have a mesh outlet (not explicitly shown in Fig. 3), which is connectable to a vacuum system. The mesh outlet is preferably arranged on top (particularly at a highest point) of the preparatory liquid hydrogen storage vessel 100 and serves for desorbing any gases attached to the adsorbent material 20 before filling the preparatory liquid hydrogen storage vessel 100 with liquid hydrogen 10. The preparatory liquid hydrogen storage vessel 100 further has a vacuum valve 160 that allows desorbing any gases and possibly providing evaporative cooling as well as pressure control of the system. Preferably there is an outlet, controlled by the valve 160, preferably protected by a mesh, located at the side of the vessel 100, ideally close to the top of the vessel 100 or at the top of the vessel 100, where the gaseous phase of the hydrogen is accessible and connected to a vacuum system (not shown).

Moreover, the preparatory liquid hydrogen storage vessel 100 has an active cooling circuit 140 for circulating a coolant, thereby actively cooling the storage volume of the preparatory liquid hydrogen storage vessel 100. The active cooling circuit 140 comprises a coolant inlet 142 for bringing a coolant into the storage volume of the preparatory liquid hydrogen storage vessel 100, and a coolant outlet 148 for bringing the coolant out of the storage volume of the preparatory liquid hydrogen storage vessel 100. By means of the active cooling circuit 140, the mixture 30 of liquid hydrogen 10 and adsorbent material 20 can be actively cooled in the preparatory liquid hydrogen storage vessel 100. For example, the preparatory liquid hydrogen storage vessel 100 can be connected to a coolant supply at a stationary location and the mixture 30 can be filled into the target liquid hydrogen storage vessel 200 at this location. However, it is also possible to disconnect the preparatory liquid hydrogen storage vessel 100 from the coolant supply and then transport it to the target liquid hydrogen storage vessel 200.

Alternatively or in addition to the active cooling, a cold-running of the preparatory liquid hydrogen storage vessel 100 may be carried out by repeatedly filling liquid hydrogen 10 into the preparatory liquid hydrogen storage vessel 100. Alternatively or in addition, a pre-cooling of the hydrogen storage volume of the preparatory liquid hydrogen storage vessel 100 and/or the adsorbent material 20 may be carried out by means of a coolant, particularly by means of cold hydrogen gas (which may be introduced into the storage volume of the preparatory liquid hydrogen storage vessel 100 via the second hydrogen inlet 130). For safety reasons, the preparatory liquid hydrogen storage vessel 100 further has a pressure relief valve 180.

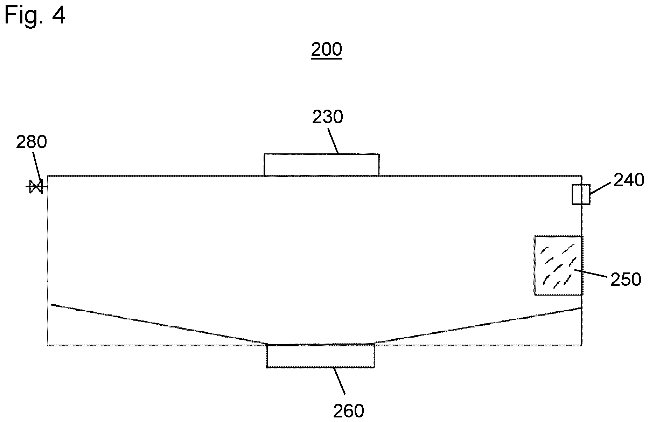

**Fig. 4** shows a schematic representation of an exemplary target liquid hydrogen storage vessel 200 as used according to preferred embodiments of the present invention. The target liquid hydrogen storage vessel 200 has an inlet 230 configured to receive the mixture 30 of liquid hydrogen 10 and adsorbent material 20. Moreover, the target liquid hydrogen storage vessel 200 has an outlet 260 configured to remove the mixture 30 of liquid hydrogen 10 and adsorbent material 20 from the target liquid hydrogen storage vessel 200. Before the target liquid hydrogen storage vessel 200 is filled, all adsorbent residues may be removed via the outlet 260. To do this, an overpressure may be generated with cold hydrogen gas (analogous to the preparatory liquid hydrogen storage vessel).

Further, the target liquid hydrogen storage vessel 200 has an outlet 240 for hydrogen gas. For example, by means of the outlet 240, a fuel cell (not shown in Fig. 4) can be supplied with gaseous hydrogen, and/or a consumer hydrogen storage tank (i.e. a third tank or vessel, not shown in Fig. 4) can be refueled with gaseous hydrogen. Moreover, the target liquid hydrogen storage vessel 200 has instrumentation 250. In particular, the target liquid hydrogen storage vessel 200 may have and/or the instrumentation 250 may comprise a vacuum valve and/or one or more electrical heaters and/or an inlet for hydrogen gas. The instrumentation 250 may also include diagnostic systems such as temperature, pressure and level sensors. For safety reasons, the target liquid hydrogen storage vessel 200 further has a pressure relief valve 280.

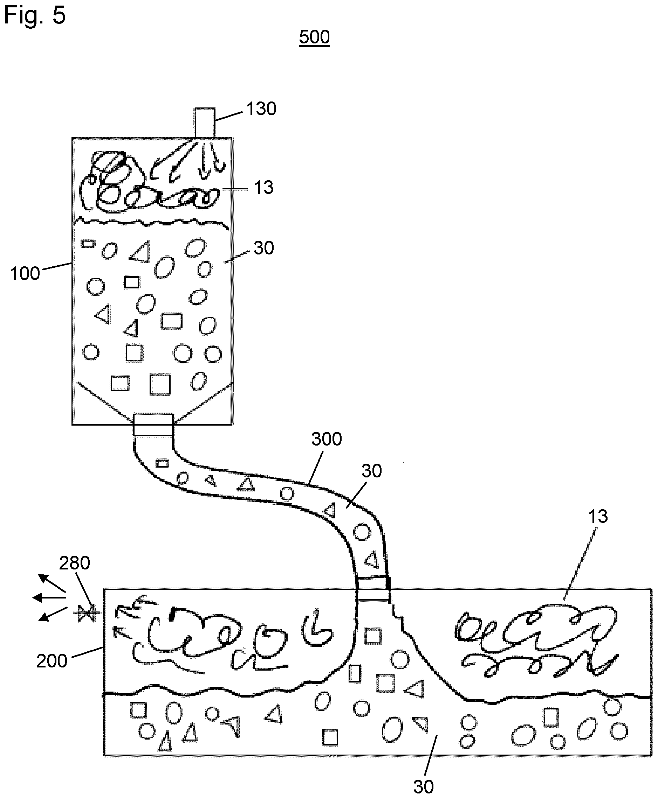

**Fig. 5** shows a schematic representation of a hydrogen storage system 500 according to a preferred embodiment of the present invention. The system 500 comprises a preparatory liquid hydrogen storage vessel 100, a target liquid hydrogen storage vessel 200, and a cryogenic-flexible transfer hose 300 for transferring a mixture 30 of liquid hydrogen 10 and adsorbent material 20 from the preparatory liquid hydrogen storage vessel 100 to the target liquid hydrogen storage vessel 200. The preparatory liquid hydrogen storage vessel 100 includes the mixture 30 and cold hydrogen gas 13. Also the target liquid hydrogen storage vessel 200 includes the mixture 30 (already transferred from the preparatory liquid hydrogen storage vessel 100) and cold hydrogen gas 13. The pressure relief valve 280 of the target liquid hydrogen storage vessel 200 prevents an overpressure in the target liquid hydrogen storage vessel 200.

Before transferring, at least in part, the mixture 30 of liquid hydrogen 10 and adsorbent material 20 from the preparatory liquid hydrogen storage vessel 100 to the target liquid hydrogen storage vessel 200, the target liquid hydrogen storage vessel 200 may be pre-cooled. Such a pre-cooling may comprise cold-running the target liquid hydrogen storage vessel 200 by filling liquid hydrogen 10 into the target liquid hydrogen storage vessel 200. Alternatively or in addition, a hydrogen storage volume of the target liquid hydrogen storage vessel 200 may be cooled by means of a coolant, particularly by means of cold hydrogen gas 13. Alternatively or in addition, a hydrogen storage volume of the target liquid hydrogen storage vessel 200 may actively be cooled. For this purpose, the target liquid hydrogen storage vessel 200 may have an active cooling system.

The target liquid hydrogen storage vessel 200 may be configured to refuel a consumer hydrogen storage tank (i.e. a third tank or vessel, not explicitly shown in Fig. 5) with gaseous hydrogen 13 and/or liquid hydrogen 10 stored in the target liquid hydrogen storage vessel 200.

In summary, the present invention particularly provides a concept for storing liquid hydrogen based on cryosorption, which improves storing and/or refueling liquid hydrogen.

### List of Reference Numerals

- 1A: hydrogen content without heat input for 0% active carbon
- 1B: hydrogen content after 13 MJ heat input for 0% active carbon
- 2A: hydrogen content without heat input for 50% active carbon
- 2B: hydrogen content after 13 MJ heat input for 50% active carbon
- 3A: hydrogen content without heat input for 100% active carbon
- 3B: hydrogen content after 13 MJ heat input for 100% active carbon
- 10: liquid hydrogen
- 13: hydrogen gas
- 20: adsorbent material
- 30: mixture of liquid hydrogen and adsorbent material
- 100: preparatory liquid hydrogen storage vessel (first vessel)
- 110: inlet for liquid hydrogen
- 120: inlet for adsorbent material (adsorbent inlet)
- 130: inlet for hydrogen gas
- 140: active colling circuit
- 142: coolant inlet
- 148: coolant outlet
- 160: vacuum valve
- 180: pressure relief valve
- 200: target liquid hydrogen storage vessel (second vessel)
- 210: inlet for mixture of liquid hydrogen and adsorbent material (mixture inlet)
- 230: outlet for mixture of liquid hydrogen and adsorbent material (mixture outlet)
- 240: outlet for hydrogen gas
- 250: instrumentation
- 280: pressure relief valve
- 300: transfer hose (conveying means)
- 500: hydrogen storage system

## Claims

1. A method for filling a target liquid hydrogen storage vessel (200), comprising:
- providing a mixture (30) of liquid hydrogen (10) and adsorbent material (20) in a preparatory liquid hydrogen storage vessel (100), the adsorbent material (20) being configured to adsorb hydrogen; and
- conveying, at least in part, the mixture (30) of liquid hydrogen (10) and adsorbent material (20) from the preparatory liquid hydrogen storage vessel (100) to the target liquid hydrogen storage vessel (200).

2. The method according to claim 1, wherein providing a mixture (30) of liquid hydrogen (10) and adsorbent material (20) comprises preparing the mixture (30) by the following steps:
- providing the preparatory liquid hydrogen storage vessel (100) containing the adsorbent material (20); and
- filling liquid hydrogen (10) into the preparatory liquid hydrogen storage vessel (100).

3. The method according to claim 1 or 2, wherein providing a mixture (30) of liquid hydrogen (10) and adsorbent material (20) comprises one or more of the following:
- cold-running the preparatory liquid hydrogen storage vessel (100) by repeatedly filling liquid hydrogen (10) into the preparatory liquid hydrogen storage vessel (100);
- pre-cooling a hydrogen storage volume of the preparatory liquid hydrogen storage vessel (100) and/or the adsorbent material (20) by means of a coolant, particularly by means of hydrogen gas (13);
- active cooling a hydrogen storage volume of the preparatory liquid hydrogen storage vessel (100).

4. The method according to any one of the preceding claims, wherein providing a mixture (30) of liquid hydrogen (10) and adsorbent material (20) comprises conveying, at least in part, liquid hydrogen (10) from a liquid hydrogen source to the preparatory liquid hydrogen storage vessel (100) containing the adsorbent material (20).

5. The method according to any one of the preceding claims, wherein conveying, at least in part, the mixture (30) of liquid hydrogen (10) and adsorbent material (20) from the preparatory liquid hydrogen storage vessel (100) to the target liquid hydrogen storage vessel (200) comprises pre-cooling the target liquid hydrogen storage vessel (200).

6. The method according to claim 5, wherein pre-cooling the target liquid hydrogen storage vessel (200) comprises one or more of the following:
- cold-running the target liquid hydrogen storage vessel (200) by filling liquid hydrogen (10) into the target liquid hydrogen storage vessel (200);
- cooling a hydrogen storage volume of the target liquid hydrogen storage vessel (200) by means of a coolant, particularly by means of hydrogen gas (13);
- active cooling a hydrogen storage volume of the target liquid hydrogen storage vessel (200).

7. The method according to any one of the preceding claims, wherein the preparatory liquid hydrogen storage vessel (100) is a first vessel of a hydrogen storage system (500), and wherein the target liquid hydrogen storage vessel (200) is a second vessel of the hydrogen storage system (500).

8. The method according to claim 7, wherein the target liquid hydrogen storage vessel (200) is configured to refuel a consumer hydrogen storage tank with gaseous hydrogen (13) and/or liquid hydrogen (10) stored in the target liquid hydrogen storage vessel (200), the consumer hydrogen storage tank being not part of the hydrogen storage system (500).

9. A hydrogen storage system (500), comprising:
- a preparatory liquid hydrogen storage vessel (100) that contains adsorbent material (20) for preparing a mixture (30) of liquid hydrogen (10) and the adsorbent material (20), the adsorbent material (20) being configured to adsorb hydrogen; and
- conveying means (300) configured to convey the mixture (30) of liquid hydrogen (10) and adsorbent material (20) from the preparatory liquid hydrogen storage vessel (100) to a target liquid hydrogen storage vessel (200).

10. The hydrogen storage system (500) according to claim 9, further comprising:
- a liquid hydrogen source; and
- a delivery line configured to convey hydrogen from the hydrogen source to the preparatory liquid hydrogen storage vessel (100).

11. The hydrogen storage system (500) according to claim 9 or 10, wherein the preparatory liquid hydrogen storage vessel (100) has a first hydrogen inlet (110) configured to receive liquid hydrogen (10) from a hydrogen source, and/or an adsorbent inlet (120) configured to receive adsorbent material (20), and/or a second hydrogen inlet (130) configured to receive pressurized hydrogen gas.

12. The hydrogen storage system (500) according to any one of claims 9 to 11, wherein the preparatory liquid hydrogen storage vessel (100) has
- an outlet (150) for draining the mixture (30) of liquid hydrogen (10) and adsorbent material (30) and/or delivering the mixture (30) of liquid hydrogen (10) and adsorbent material (20) to the target liquid hydrogen storage vessel (200), wherein the outlet (150) is preferably arranged on the bottom of the preparatory liquid hydrogen storage vessel (100); and/or
- a mesh outlet which is connectable to a vacuum system.

13. The hydrogen storage system (500) according to any one of claims 9 to 12, further comprising
- the target liquid hydrogen storage vessel (200) for receiving and storing the mixture (30) of liquid hydrogen (10) and adsorbent material (20) prepared in the preparatory liquid hydrogen storage vessel (100).

14. The hydrogen storage system (500) according to any one of claim 13, wherein the target liquid hydrogen storage vessel (200) has an inlet (230) configured to receive the mixture (30) of liquid hydrogen (10) and adsorbent material (20).

15. The hydrogen storage system (500) according to claim 13 or 14, wherein the target liquid hydrogen storage vessel (200) has an outlet (260) configured to remove the mixture (30) of liquid hydrogen (10) and adsorbent material (20) from the target liquid hydrogen storage vessel (200).
